# EUROPÄISCHE PATENTSCHRIFT

(11) **EP 1 545 951 B1**
(45) Veröffentlichungstag und Bekanntmachung des Hinweises auf die Patenterteilung: **04.04.2007**
(21) Anmeldenummer: 03757805.1
(22) Anmeldetag: 09.09.2003
(51) Int. Cl.: B60T 8/36, B60T 8/40

(54) **HYDRAULIKAGGREGAT FÜR SCHLUPFGEREGELTE BREMSANLAGEN**
HYDRAULIC UNIT FOR ANTI-SLIP BRAKING SYSTEMS
GROUPE HYDRAULIQUE POUR SYSTEMES DE FREINAGE A REGULATION DE GLISSEMENT

(30) Priorität: 27.09.2002 DE 10245068
(43) Veröffentlichungstag der Anmeldung: 29.06.2005
(73) Patentinhaber: Continental Teves AG & Co. oHG, 60488 Frankfurt am Main (DE)
(72) Erfinder: HINZ, Axel, 61267 Neu-Anspach (DE); REINARTZ, Hans-Dieter, 60439 Frankfurt/M (DE); OTTO, Albrecht, 61137 Schöneck (DE); DINKEL, Dieter, 65824 Schwalbach (DE)
(86) Internationale Anmeldenummer: PCT/EP2003/009975
(87) Internationale Veröffentlichungsnummer: WO 2004/031013

(56) Entgegenhaltungen:
- WO-A-00/46089
- WO-A-01/72568
- WO-A-99/13252
- DE-A- 19 805 843
- US-A- 4 580 848
- PATENT ABSTRACTS OF JAPAN vol. 1998, no. 14, 31. Dezember 1998 (1998-12-31) -& JP 10 258724 A (TOYOTA MOTOR CORP), 29. September 1998 (1998-09-29)

## Beschreibung

Die Erfindung betrifft ein Hydraulikaggregat für schlupfgeregelte Bremsanlagen nach dem Oberbegriff des Patentanspruchs 1. Aus der DE 198 05 843 A1 ist ein Hydraulikaggregat für eine schlupfgeregelte Bremsanlage bekannt geworden, in dessen Aufnahmekörper Ventilaufnahmebohrungen in einer ersten und zweiten Ventilreihe zur Aufnahme von Ein- und Auslaßventilen eingebracht sind. Im Abstand zu den beiden Ventilreihen ist im blockförmigen Aufnahmekörper eine dritte Ventilreihe angeordnet, welche sogenannte Sonderventile aufnimmt. Zwischen den paarweise angeordneten Ventilreihen und der dritten Ventilreihe ist im Aufnahmekörper eine Pumpenaufnahmebohrung für ein Pumpenantriebselement vorgesehen. Aufnahmebohrungen für zwei Fördervorrichtungen erstrecken sich parallel zu den Ventilreihen sowie rechtwinklig zur Einmündungsrichtung der Ventilaufnahmebohrungen in den Aufnahmekörper.

Das bekannte Aggregat eignet sich nicht zum Einsatz innerhalb eines elektrohydraulischen Bremssystems, bei dem der Fahrzeugführer lediglich einen Bremswunsch äußert, welcher gewissermaßen by-wire von dem Bremssystem umgesetzt wird. Denn bei derartigen Systemen wird die Pumpe zum Aufladen eines Hochdruckspeichers herangezogen, welcher zur Druckerhöhung in Radbremsen herangezogen wird. Ausgehend von dem bereitzustellenden Hochdruckvolumen ist eine Pumpe erforderlich, welche nicht nur einen hohen Druckmitteldruck, sondern auch einen hohen Druckmittelvolumenstrom bei geringem Betriebsgeräusch bereitstellt.

Es ist grundsätzlich bekannt, Pumpen mit beispielsweise drei Fördervorrichtungen zur Aufladung eines Druckmittelspeichers heranzuziehen.

Eine Integration derartiger Pumpen in einen grundsätzlich bekannten Aufnahmekörper eines Hydraulikaggregates erfordert - im Vergleich mit herkömmlichen Pumpen - einen vergrößerten Raumbedarf. Dies widerspricht dem Erfordernis nach Miniaturisierung.

Daher ist es eine Aufgabe der vorliegenden Erfindung, ein Hydraulikaggregat mit mehreren Fördervorrichtungen nach der angegebenen Art derart zu verbessern, daß es bei effizienter Ausnutzung des Bauraumes im Aufnahmekörper sowie bei geringem Betriebsgeräusch zum Einsatz bei elektrohydraulischen Bremsanlagen (EHB) geeignet ist.

Diese Aufgabe wird erfindungsgemäß für ein Hydraulikaggregat der eingangs genannten Gattung durch die kennzeichnenden Merkmale des Patentanspruchs 1 gelöst. Demnach ist eine erste Aufnahmebohrung für eine erste Fördervorrichtung der Pumpe zwischen Ventilaufnahmebohrungen der ersten und zweiten Ventilreihe hindurchgeführt, und eine zweite und dritte Aufnahmebohrung zur Aufnahme von zweiten und dritten Fördervorrichtungen der Pumpe ist zwischen Ventilaufnahmebohrungen der dritten Ventilreihe hindurchgeführt.

Weitere Merkmale und Vorteile der Erfindung gehen im nachfolgenden aus der Beschreibung eines Ausführungsbeispieles anhand mehrerer Zeichnungen hervor.

Es zeigen:
- Fig. 1: einen schematisierten hydraulischen Schaltplan zur Verdeutlichung der Kanalführung eines elektrohydraulischen Bremssystems,
- Fig. 2a,b,c: ein Hydraulikaggregat in Vorderansicht (Fig. 2a), Seitenansicht von links (Fig. 2b) sowie in Draufsicht (Fig. 2c), jeweils in kleinerem Maßstab,
- Fig. 3: eine dreidimensionale Darstellung eines Aufnahmekörpers zur Verdeutlichung von Aufnahmebohrungen sowie der Kanalführung,
- Fig. 4: eine um 180° um eine Hochachse u gedrehte dreidimensionale Darstellung des Aufnahmekörpers in Fig. 3,
- Fig. 5: ein stark durch Weglassung von Pumpenbohrungen vereinfachter Aufnahmekörper gemäß Fig. 3 sowie um 180° um eine Längsachse w gedreht,
- Fig. 6: eine weitere Ansicht des Aufnahmekörpers zur Verdeutlichung von Rückschlagventilaufnahmebohrungen,
- Fig. 7: Einzelheiten des Aufnahmekörpers zur Verdeutlichung der Pumpensaugseite, und
- Fig. 8: Einzelheiten des Aufnahmekörpers zur Verdeutlichung des Druckmittelrücklauf.

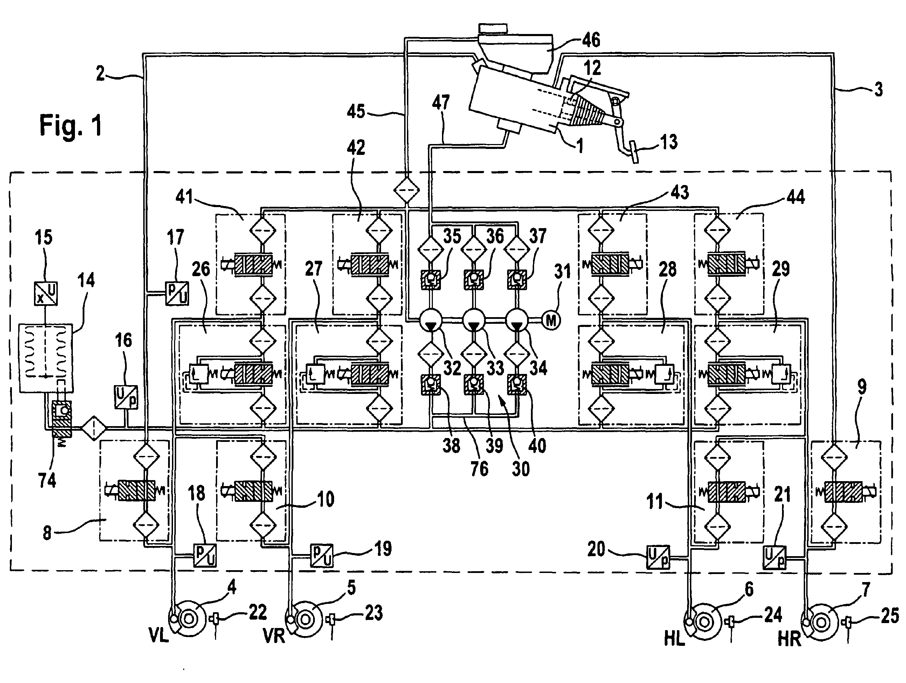

Der in Fig. 1 schematisch skizzierte Schaltplan einer elektrohydraulischen Bremsanlage mit sogenannter Schwarz/Weiß Aufteilung umfaßt einen pedalbetätigten Tandem-Hauptzylinder 1 mit Simulatormitteln, an dessen hydraulische Bremskreise 2,3 in gewohnter Weise je Achse jeweils zwei Radbremsen 4 (VL), 5 (VR); 6 (HL), 7 (HR) angeschlossen sind. Die zwischengeschalteten Hydraulikventile 8,9;10,11 sind stromlos auf Durchlass geschaltet. 8,9 sind Trennventile, welche den Hauptzylinder 1 bei Bestromung von den Radbremsen 4 bis 7 abtrennen. Die Ventile 10,11 dienen im Normalbetrieb einem Druckausgleich zwischen den Radbremsen 4,5;6,7 einer Achse und können zum Zweck eines Fahrstabilitätsregelungseingriffs oder zur radindividuellen Bremsdruckregelung selektiv geschlossen werden.

Nach Aktivierung der Trennventile 8,9 sind die Bremskreise 2,3 zumindest im Bereich von Leitungen die von dem Tandem-Hauptzylinder 1 zu den Radbremsen 4 bis 7 führen, unterbrochen, so daß das Bremsgeschehen bzw. der Bremsdruckverlauf in den Radbremsen 4 bis 7 ausschließlich sensorisch-in Abhängigkeit von elektrischen Signalen bestimmt wird, die mit Hilfe eines Pedalwegsensors 12 zur Erfassung der Betätigung des Bremspedals 13 oder eines sonstigen Bremsbetätigungsorgans gewonnen werden (SBC, Sensoric Brake Control).

Die Bremsanlage enthält ferner einen Hochdruckspeicher 14, hier beispielsweise einen Faltenbalg-Speicher, der in dem dargestellten Ausführungsbeispiel mit einem Wegsensor 15 zur Ermittlung des Speicher-Füllstandes ausgerüstet ist, und zur Wegerfassung eines Medientrennelementes herangezogen wird. Der Wegsensor 15 ist jedoch nicht zwingend erforderlich, wenn beispielsweise zwischen Trennventil 8 und der Radbremse 4,5 ein sogenannter Trennkolben vorgesehen ist. Diese Ausführungsform wird ausdrücklich in den Gesamtoffenbarungsgehalt einbezogen. Zur Messung des vorrätigen Hydraulikdrucks ist dem Hochdruckspeicher 14 ein Drucksensor 16 zugeordnet.

Der vom Fahrzeugführer definierte Druck wird in einem der Bremskreise 2,3 mittels eines Drucksensors 17 gemessen. Weitere Drucksensoren 18,19,20,21 messen den tatsächlichen Druck in den Radbremsen 4,5,6,7. Das Raddrehverhalten wird anhand von Raddrehsensoren 22,23,24,25 erfaßt.

Aus dem Schaltplan ist ohne weiteres ersichtlich, daß durch Umschaltung von stromlos geschlossenen Einlaßventilen 26,27,28,29 Bremsdruck aus einer Druckquelle zu den Radbremsen 4 bis 7 geleitet werden kann. Die Druckquelle umfaßt im wesentlichen den Hochdruckspeicher 14 sowie eine Pumpe 30, insbesondere elektromotorisch 31 angetriebene Kolbenpumpe mit drei Fördervorrichtungen 32,33,34, welche saugseitig über jeweils ein Rückschlagventil 35,36,37 und einen gemeinsamen Saugkanal 47 mit einer Druckkammer des Hauptzylinder 1 verbunden ist. Die vorgeschlagene 3-Kolbenpumpe verfügt neben ausgeglichenen Massenkräften über geringe Pulsationen, so daß ein geringes Betriebsgeräusch auftritt.

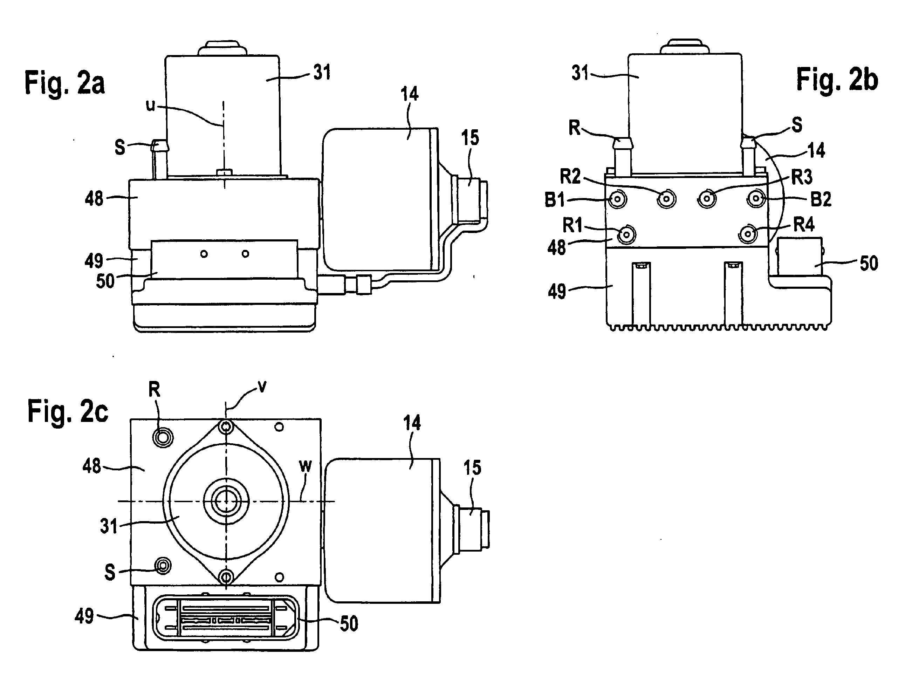

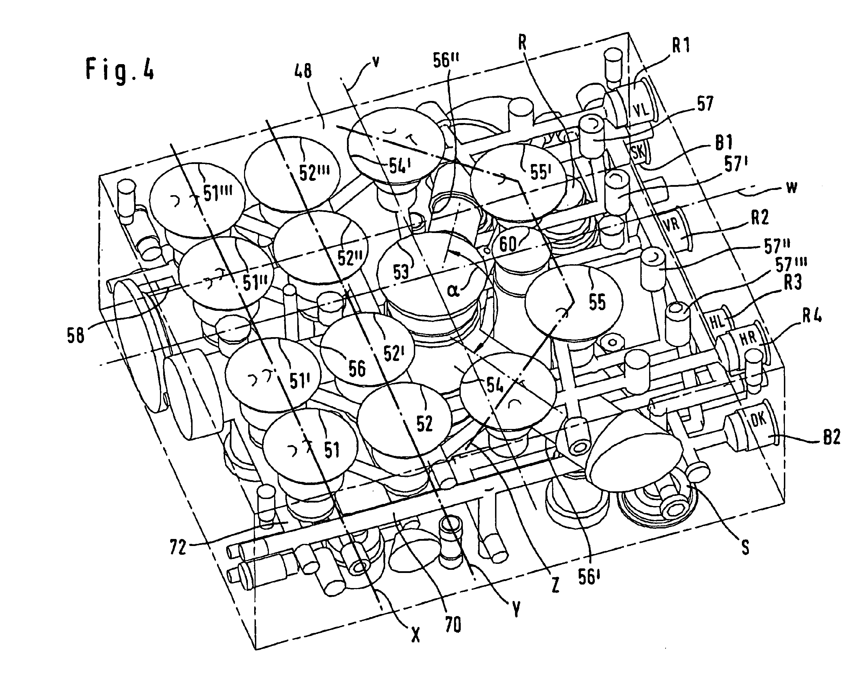

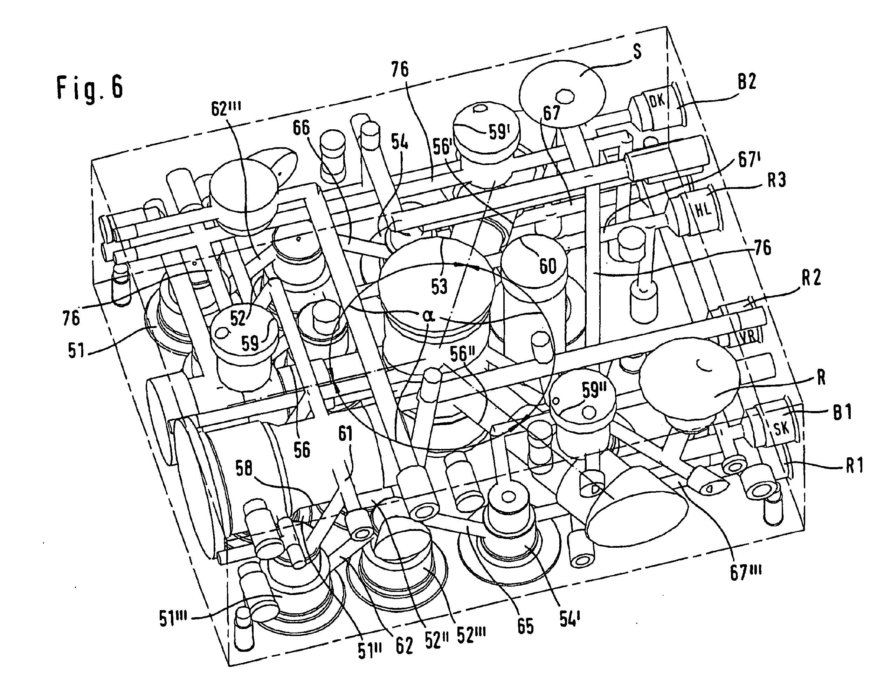

Zum Aufladen des Hochdruckspeicher 14 verfügt jede Fördervorrichtung 32,33,34 über Rückschlagventile 38,39,40 (Druckventile), die in einen gemeinsamen, im wesentlichen U-förmigen sowie mit einem Filter versehenen Sammelkanal 76 führen, der in den Hochdruckspeicher 14 mündet (Fig. 6). Dadurch ist sichergestellt, daß in dem Hochdruckspeicher 14 gefiltertes Druckmittel vorrätig ist. Eine Verschmutzung oder Beschädigung von nachgeschalteten Bauteilen wie insbesondere Ventilsitzen erfolgt nicht. Der Druck in den Radbremsen 4 bis 7 wird durch entsprechende, vorteilhafterweise proportional geregelte Ansteuerung der Einlaßventile 26 - 29 dosiert. Zum Abbau des Bremsdruckes in den Radbremsen 4-7 sind Auslaßventile 41 bis 44 vorgesehen, deren Ausgänge über einen Rücklaufkanal 45 zu einem Druckmittelbehälter 46 geführt sind.
Alle innerhalb eines in Fig. 1 gestrichelt dargestellten Bereiches angeordneten Bauteile und Aggregate befinden sich unmittelbar an oder in einem Aufnahmekörper 48 einer Hydraulikeinheit (HCU) dessen Einzelheiten nachstehend anhand der Figuren 2 bis 8 beschrieben werden.

Aus den Figuren 2a,b,c geht die Hydraulikeinheit mit an dem Aufnahmekörper 48 montierten Aggregaten, wie Elektromotor 31, Gehäuse 49 für einen elektronischen Regler (ECU) sowie Hochdruckspeicher 14 hervor. Elektromotor 31 und Gehäuse 49 sind auf einander gegenüberliegenden Ober- und Unterseiten des Aufnahmekörpers 48 angeordnet. Eine Steckerleiste 50 zum Anschluß der ECU mit Elektromotor 31 an eine Stromversorgung sowie ein fahrzeugseitiges Bus-System ist seitlich neben dem Aufnahmekörper 48 sowie parallel zu einer Achse des Elektromotor 31 weisend vorgesehen. Der Hochdruckspeicher 14 ist auf einer Längsseite des Aufnahmekörpers 48 um 90° zu einer Hochachse u zwischen Elektromotor 31 und Gehäuse 49 verschwenkt sowie gegenüber der Seite mit den Radanschlüssen R1-R4 angeordnet, was eine besonders kompakte Bauweise und eine bauraumoptimierte Verbohrung des Aufnahmekörpers 48 erlaubt. Wenn die Einbaulage des Hydraulikaggregates im Fahrzeug so gewählt ist, daß der Hochdruckspeicher 14 vertikal nach unten weist, steigt speicherseitig (beispielsweise infolge Speicherdefekt) in das System eindringende Luft in die Speicheraufnahmebohrung 58 auf, so daß diese mit Entlüftungsmethoden einfach aus dem Aufnahmekörper 48 entfernt werden kann.

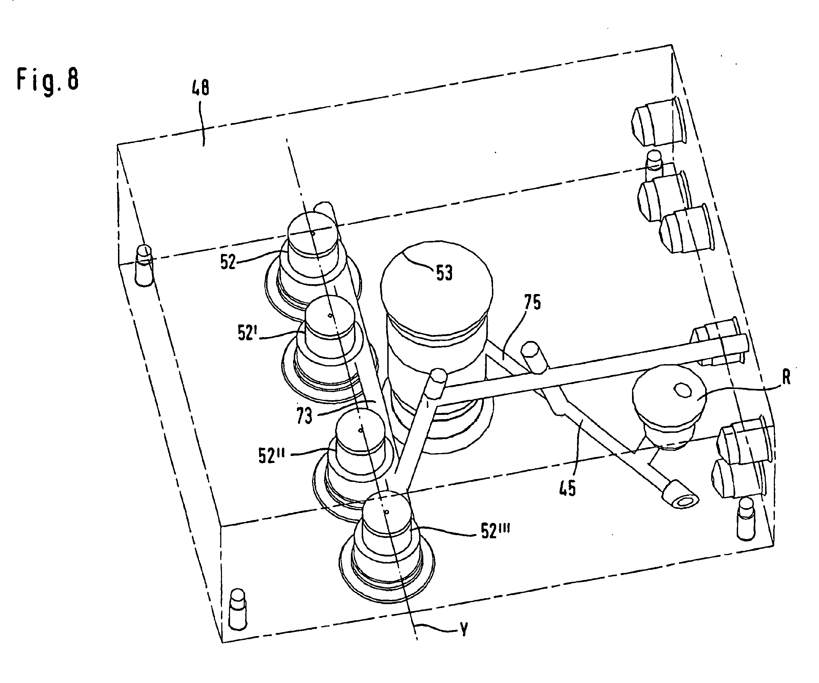

Es soll jedoch nicht verschwiegen werden, daß auch Bauformen möglich sind, bei denen Elektromotor 31 und Hochdruckspeicher 14 auf einer gemeinsamen Seite des Aufnahmekörpers 48 angeordnet sind, wodurch sich eine besonders einheitliche und zu Servicezwecken leicht zugängliche Anordnung dieser Bauteile im Fahrzeug ergibt.
Der speicherseitige Wegsensor 15 ist über eine Leitung elektrisch mit der ECU verbunden. Auf einer dem Hochdruckspeicher 14 gegenüberliegenden Längsseite befinden sich hydraulische Anschlüsse R1-R4 für die Radbremsen 4 bis 7, sowie Anschlüsse B1,B2 für Kreise 2,3 (Druckräume) des Hauptzylinders 1. Auf einer motorseitigen Oberseite ist ein Rücklaufanschluß R zur Verbindung des Druckmittelbehälters 46 mit dem pumpenseitigen Rücklaufkanal 45 vorgesehen. Der Rücklaufkanal 45 gabelt sich und mündet einerseits mittels einen Bypass 75 in ein grundsätzlich mit Druckmittel gefülltes Kurbelgehäuse innerhalb der Pumpenaufnahmebohrung 53, und andererseits in einen die Aufnahmebohrungen 52-52"' (Auslassventilaufnahmebohrungen) miteinander verbindenden Sammelkanal 73 (Fig. 8). Auf der Oberseite ist darüber hinaus ein Sauganschluß S vorgesehen, über den ein Saugkanal 47 der Pumpe 30 an den Druckmittelbehälter 46 angeschlossen ist.

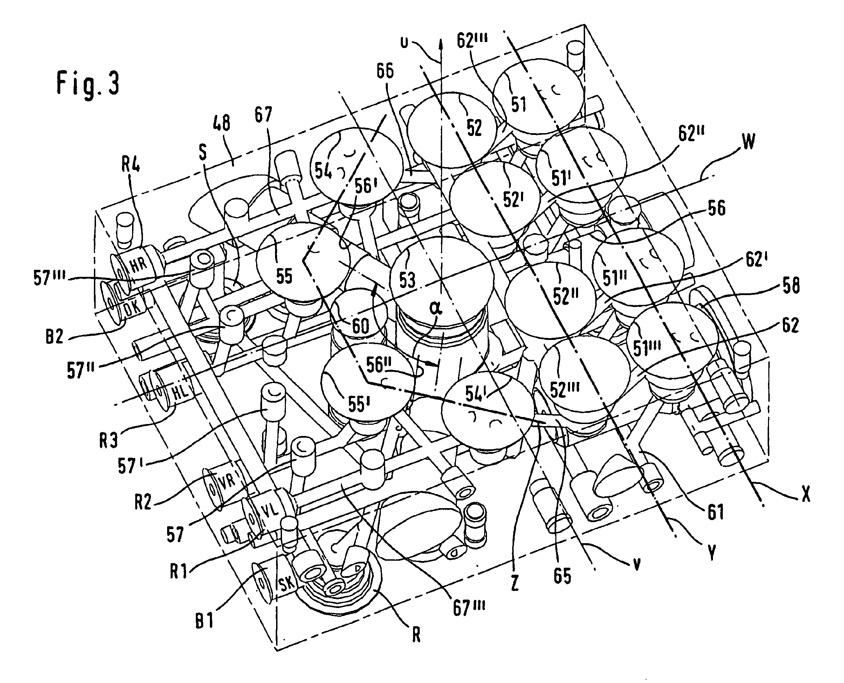

Aus den Fig. 3 bis 8 geht die Architektur des Aufnahmekörpers 48 in erheblich vergrößertem Maßstab hervor. Der Aufnahmekörper 48 umfaßt in jeweils einer ersten und in einer zweiten Ventilreihe X,Y insgesamt acht Ventilaufnahmebohrungen 51,51',51",51'" (Einlaßventilaufnahmebohrungen) ; 52,52',52"',52"' (Auslaßventilaufnahmebohrungen) in die die elektromagnetisch betätigbaren Einlaß- und Auslaßventile (26-29;41-44) eingesetzt werden können. Neben der Ventilreihe Y befindet sich eine Pumpenaufnahmebohrung 53, zur Aufnahme wenigstens eines Pumpenantriebselementes wie beispielsweise einen Exzenter zum Antrieb von Pumpenkolben. Die Pumpenaufnahmebohrung 53 erstreckt sich achsparallel zu den Ventilaufnahmebohrungen (51-51"',52-52"'), dient zumindest teilweise als Kurbelgehäuse und nimmt einen, dem Antrieb der Pumpe 30 dienenden Exzenter- oder Kurbelantrieb auf.

Aus den Fig. 3-6 geht ferner eine dritte Ventilreihe Z hervor, die neben der Pumpenaufnahmebohrung 53 sowie entfernt von - als auch gegenüberliegend zu - der ersten und zweiten Ventilreihe X,Y in die Gehäusefläche des Aufnahmekörpers 48 einmündet. Diese dritte Ventilreihe Z gewährleistet unter anderem die Möglichkeit einer radindividuellen Bremsdruckregelung wie auch eine Antriebsschlupf- bzw. Fahrdynamikregelungsfunktion. In äußeren Ventilaufnahmebohrungen 54,54' sind die Trennventile 8,9 einsetzbar. In die beiden dazwischenliegenden Ventilaufnahmebohrungen 55,55' sind die Druckausgleichsventile 10,11 einsetzbar. Wie zu ersehen ist, unterscheidet sich die genaue Anordnung der Ventilreihe Z durch eine Trapezform von der linienförmigen Anordnung der beiden anderen Ventilreihen X,Y. Generell sind für die Ventilreihen X,Y,Z auch abgewandelte Anordnungsformen denkbar, soweit der Reihencharakter zumindest eingeschränkt erhalten bleibt.

Die Anordnung der in den Aufnahmekörper 4 einmündenden Anschlüsse B1, B2 des Hauptzylinders 1 und der zu den Radbremsen führenden Anschlüsse R1, R2, R3, R4 ermöglicht ein einheitliches Anschlußbild für Bremsleitungen an einer Seitenfläche des Aufnahmekörpers 48. Vorteilhafterweise weist diese Seitenfläche im Fahrzeug nach oben, so daß für die Montage oder Demontage einfach darauf zugegriffen werden kann.

Zur Aufnahme der drei Fördervorrichtungen 32,33,34 sind drei sternförmig von der Pumpenaufnahmebohrung 53 ausgehende Aufnahmebohrungen 56 bis 56" vorgesehen, von denen die erste zwischen Ventilaufnahmebohrungen 51',51";52',52" der ersten und zweiten Ventilreihe X,Y hindurchgeführt ist, und die zweite und dritte Aufnahmebohrung 56', 56" zwischen Ventilaufnahmebohrungen (54,55;54',55') der dritten Ventilreihe Z hindurchgeführt sind,
so daß der zur Verfügung stehende Bauraum optimiert genutzt wird.
Wie zu ersehen ist, erstreckt sich die Aufnahmebohrung 56 quer zu den beiden Ventilreihen X,Y. Benachbarte Aufnahmebohrungen 56,56',56" sind jeweils v-förmig sowie mit identischem Winkel α von 120° zueinander angeordnet. Außenseitig weist jede Aufnahmebohrung 56,56',56" das Rückschlagventil 35,36,37 (Saugventil) zur Druckmittelventilation in einem Verdrängungsraum auf. Es versteht sich, daß jede Fördervorrichtung 32,33,39 in bekannter Weise translatorisch verschiebbare Verdrängungskolben aufweisen kann, welche unmittelbar in dem Werkstoff des Aufnahmekörpers 48 oder in Hülsen aus verschleißfestem Werkstoff geführt sind.

Im Abstand zu der dritten Ventilreihe Z ist eine Reihe mit Drucksensoraufnahmebohrungen 57,57',57",57"' vorgesehen, und zumindest ein äußerer Teil der Aufnahmebohrung 56',56" erstreckt sich jeweils zwischen einer Ventilaufnahmebohrung 54,54' der dritten Ventilreihe Z sowie einer Drucksensoraufnahmebohrung 57,57"'. Es soll nicht verschwiegen werden, daß optional weitere Drucksensoraufnahmebohrungen für Drucksensoren 16,17 möglich sind, welche zur Drucksensierung in einem Kreis 2,3 des Hauptylinders 1 oder in dem Hochdruckspeicher 14 dienen.

Achsparallel zu der ersten Aufnahmebohrung 56 und mit dieser auf einer einzigen Stirnfläche des Aufnahmekörpers 48 ist eine Speicheraufnahmebohrung 58 angeordnet, welche einerseits mit dem Hochdruckspeicher 14 und andererseits über hydraulische Kanäle und zwischengeschaltete Rückschlagventile 38-40 (Druckventile) mit den Fördervorrichtungen 32,33,34 verbunden ist. Durch diese Anordnung wird der auf dieser Seite zur Verfügung stehende Raum optimal genutzt. Denn zwischen Hochdruckspeicher 13 und Radbremsen 4-7 ist ein Schließventil 74 vorgesehen, das innerhalb der Speicheraufnahmebohrung 58 bzw. einem in die Speicheraufnahmebohrung 58 einzuschraubenden Anschlußstutzen integriert ist. Wie aus den Figuren hervorgeht, ist die Speicheraufnahmebohrung 58 rechtwinklig zu der Erstreckungsrichtung der Ventilreihen X,Y zwischen jeweils benachbarten Ventilaufnahmebohrungen 51",51"';52",52"' vorgesehen. Rückschlagventilaufnahmebohrungen (Druckventilaufnahmebohrungen) 59,59',59" sind achsparallel zu der Pumpenaufnahmebohrung 53 vorgesehen und münden jeweils in eine zugehörige Aufnahmebohrung 56,56',56" für eine entsprechende Fördervorrichtung 32,33,34 (Fig. 6).

Es sei hinzugefügt, daß zwischen den Aufnahmebohrungen 56',56" eine Durchgangsbohrung 60 vorgesehen ist, welche zur Durchführung einer elektrischen Versorgungsleitung für den Elektromotor 31 herangezogen werden kann. Weitere Durchgangsbohrungen zur Duchführung weiterer Elemente wie insbesondere zum elektrischen Anschluß des Wegsensors 15 sind möglich. Ferner ist es denkbar, Durchgangsbohrungen für Befestigungsmittel vorzusehen, um den Elektromotor 31 sowie das Gehäuse 49 der ECU mit gleicher Anpreßkraft an dem Aufnahmekörper 48 zu befestigen.

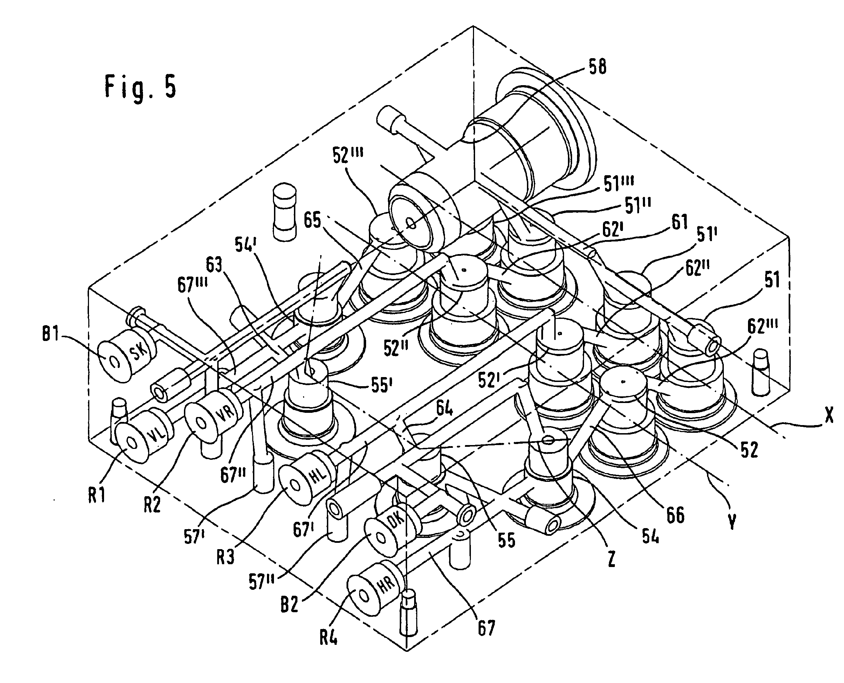

Einzelheiten zur Verbohrung des Aufnahmekörpers 48 gehen aus den Fig. 5-8 hervor. Insbesondere Fig. 5 verdeutlicht die absperrbare hydraulische Verbindung des Hochdruckspeichers 14 mit den Radbremsanschlüssen R1-R4. Zur Druckversorgung ist die Speicheraufnahmebohrung 58 durch einen Querkanal 61 mit den Ventilaufnahmebohrungen 51-51"' der ersten Ventilreihe X verbunden. Von jeder Einlaßventilaufnahmebohrung 51-51"' gelangt das Druckmittel bei entsprechender Ventilansteuerung über einen Verbindungskanal 62, 62' , 62" , 62"' zu einer Ventilaufnahmebohrung 52-52"' für ein Auslaßventil 41-44. Ausgleichskanäle 63,64 dienen zum Druckausgleich zwischen Radbremsen 4,5;6,7 einer Achse, soweit die Ausgleichsventile 10,11 (wie aus Fig. 1 ersichtlich) geöffnet sind. Von äußeren Ventilaufnahmebohrungen 52,52''' führen Kanäle 65,66 zu den Ventilaufnahmebohrungen 54,54' für die Trennventile 8,9, die wiederum über Verbindungskanäle 67,67',67",67"' an die Radbremsanschlüsse R1-R4 angebunden sind.

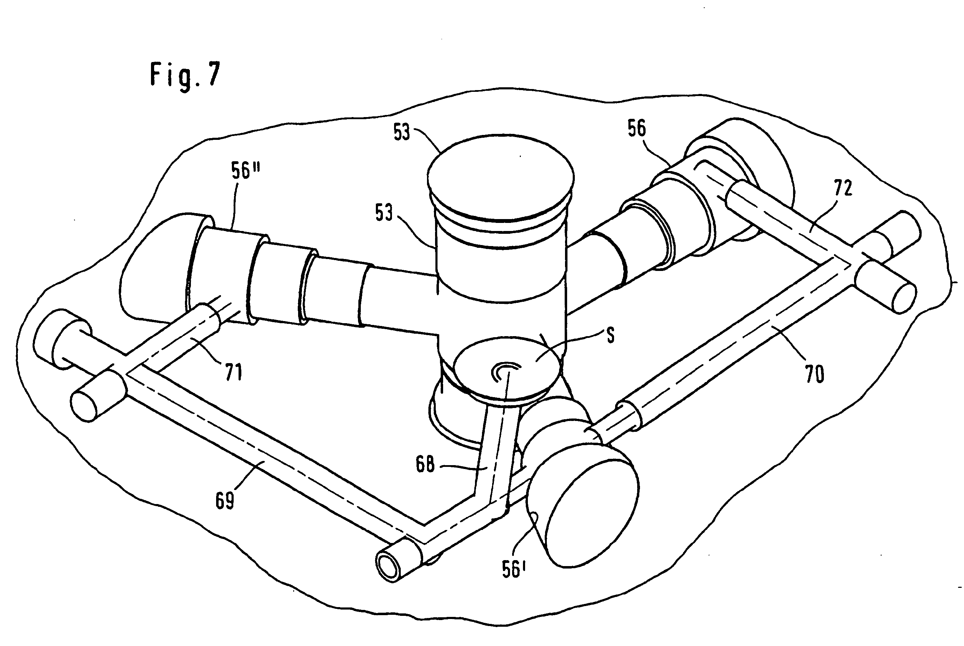

Fig. 7 verdeutlicht die Pumpensaugseite mit einem Sauganschluß S, welcher mit geringem seitlichen Versatz zu der Aufnahmebohrung 56' für die zweite Fördervorrichtung 33 vorgesehen ist. Der Sauganschluß S mündet über einen im wesentlichen senkrechten Verbindungsabschnitt 68 in zwei L-förmig angeordnete Leitungsabschnitte 69,70 von denen im wesentlichen rechtwinklig abknickende Verbindungsstücke 71,72 in die Aufnahmebohrungen 56" ,56 führen. Durch diese Anordnung weist die Fördervorrichtung 33 die geringste Ansauglänge auf, während die Sauglänge der Fördervorrichtungen 32 und 34 etwa gleich ist.

Der Druckmittelrücklauf in Richtung Druckmittelbehälter 46 geht aus Fig. 8 hervor. Zum Ablassen des Drucks in den Radbremsen 4-7 werden die Auslaßventile 41-44 geöffnet. Ein parallel zur Ventilreihe Y verlaufender Sammelkanal 73 verbindet alle Auslassventilaufnahmebohrungen 52-52"' miteinander und führt über einen Rücklaufkanal 45 zu dem Rücklaufanschluß R, welcher hydraulisch an den Druckmittelbehälter 46 angebunden ist. In den Rücklaufanschluß R ist mit Vorteil ein Filter eingesetzt, so daß in den Druckmittelbehälter 46 gefiltertes Druckmittel einströmt. Wie zu ersehen ist, erstreckt sich zwischen dem gefluteten Kurbelgehäuse in der Pumpenaufnahmebohrung 53 und dem Rücklaufkanal 45 ein Bypass 75, so daß etwaige Leckageflüssigkeit der Fördervorrichtungen 32-34 weiterhin der Druckmittelzirkulation zur Verfügung steht. Dadurch besteht ein wesentlicher Vorteil im Vergleich mit Systemen, bei denen Leckageflüssigkeit in ein separates Reservoir oder in die Umgebungsatmosphäre abgeführt wird, und dadurch ein Absinken des Druckmittelbehälterfüllstandes verursacht.

### Bezugszeichenliste

- 1: Hauptzylinder.
- 2,3: Bremskreis
- 4,5,6,7: Radbremse
- 8,9: Trennventil
- 10,11: Ausgleichsventil
- 12: Pedalwegsensor
- 13: Bremspedal
- 14: Hochdruckspeicher
- 15: Wegsensor
- 16-21: Drucksensor
- 22-25: Raddrehsensor
- 26-29: Einlaßventil
- 30: Pumpe
- 31: Elektromotor
- 32,33,34: Fördervorrichtung
- 35-40: Rückschlagventil
- 41-44: Auslaßventil
- 45: Rücklaufkanal
- 46: Druckmittelbehälter
- 47: Saugkanal
- 48: Aufnahmekörper
- 49: Gehäuse
- 50: Steckerleiste
- 51-51"': Ventilaufnahmebohrung (Einlaßventile)
- 52-52"': Ventilaufnahmebohrung (Auslaßventile)
- 53: Pumpenaufnahmebohrung
- 54,54': Ventilaufnahmebohrung
- 55,55': Ventilaufnahmebohrung
- 56, 56', 56": Aufnahmebohrung
- 57-57"': Drucksensoraufnahmebohrung
- 58: Speicheraufnahmebohrung
- 59-59": Rückschlagventilaufnahmebohrung
- 60: Durchgangsbohrung
- 61: Querkanal
- 62-62"': Bypass
- 63,64: Ausgleichskanal
- 65,66: Kanal
- 67-67"': Verbindungskanal
- 68: Verbindungsabschnitt
- 69,70: Leitungsabschnitt
- 71,72: Verbindungsstück
- 73: Sammelkanal
- 74: Schließventil
- 75: Bypass
- 76: Sammelkanal

- R1, R2: Radbremsanschlüsse (VA)
- R3, R4: Radbremsanschlüsse (HA)
- S: Sauganschluß
- R: Rücklaufanschluß
- B1, B2: Bremsdruckgeberanschlüsse
- X,Y,Z: Ventilreihen
- u: Hochachse
- v: Querachse
- w: Längsachse
- α: Winkel

## Patentansprüche

1. Hydraulikaggregat für schlupfgeregelte Bremsanlagen,
mit einem Aufnahmekörper (48), der in mehreren Ventilaufnahmebohrungen (51-51"',52-52"') einer ersten und zweiten Ventilreihe (X,Y) Ein- und Auslaßventile (26-29;41-44) aufnimmt,
mit weiteren, im Abstand zu der ersten und der zweiten Ventilreihe (X,Y) in einer dritten Ventilreihe (Z) angeordneten Ventilaufnahmebohrungen (54,54',55,55'),
mit einer zwischen der zweiten und dritten Ventilreihe (X,Y) angeordneten Pumpenaufnahmebohrung (53) zur Aufnahme wenigstens eines Pumpenantriebselementes, und mit Aufnahmebohrungen (56,56',56"') zur Aufnahme von Fördervorrichtungen (32,33,34) einer Pumpe (30), sowie
mit mehreren, die Ventile (26-29;41-44;8-11), sowie Radbremsen (4-7) verbindenden Druckmittelkanälen, die eine hydraulische Verbindung zwischen einem Bremsdruckgeber (1) und den Radbremsen (4-7) herzustellen vermögen,
**dadurch gekennzeichnet, daß**
eine erste Aufnahmebohrung (56) für eine erste Fördervorrichtung (32) der Pumpe (30) zwischen Ventilaufnahmebohrungen (51',51")der ersten und zweiten Ventilreihe (X,Y) hindurchgeführt ist, und
daß zweite und dritte Aufnahmebohrungen (56', 56") zur Aufnahme von zweiten und dritten Fördervorrichtungen (33,34) der Pumpe (30) zwischen Ventilaufnahmebohrungen (54,55;54',55') der dritten Ventilreihe (Z) hindurchgeführt sind.

2. Hydraulikaggregat nach Anspruch 1, **dadurch gekennzeichnet, daß** die Aufnahmebohrungen (56,56',56") für Fördervorrichtungen (32,33,34) v-förmig im Winkel (α) zueinander angeordnet sind.

3. Hydraulikaggregat nach Anspruch 2, **dadurch gekennzeichnet, daß** der Winkel (α) zwischen jeweils benachbarten Aufnahmebohrungen (56,56',56") indentisch ist und 120° beträgt.

4. Hydraulikaggregat nach Anspruch 1, **dadurch gekennzeichnet, daß** eine Reihe mit Drucksensoraufnahmebohrungen (57,57',57",57"') vorgesehen ist, welche neben der dritten Ventilreihe (Z) angeordnet ist, und daß jeweils die zweite und die dritte Aufnahmebohrung (56',56") für Fördervorrichtungen (33,34) der Pumpe (30) zwischen Ventilaufnahmebohrungen (54,54') der dritten Ventilreihe (Z) und zwischen Drucksensoraufnahmebohrungen (57,57"') hindurchgeführt sind.

5. Hydraulikaggregat nach Anspruch 2, **dadurch gekennzeichnet, daß** eine Speicheraufnahmebohrung (58) achsparallel zu der ersten Aufnahmebohrung (56) für die erste Fördervorrichtung (32) vorgesehen ist, und daß die Speicheraufnahmebohrung (58) und die erste Aufnahmebohrung (56) an einer Stirnfläche des Aufnahmekörpers (48) angeordnet sind.

6. Hydraulikaggregat nach Anspruch 5, **dadurch gekennzeichnet, daß** die Speicheraufnahmebohrung (58) zwischen benachbarten Ventilaufnahmebohrungen (51",51"';52",52"') sowie rechtwinklig zu den Ventilreihen (X,Y) hindurchgeführt ist.

7. Hydraulikaggregat nach Anspruch 1, **dadurch gekennzeichnet, daß** in jede Aufnahmebohrung (56,56',56") für eine Fördervorrichtung (32,33,34) eine Rückschlagventilaufnahmebohrung (59,59',59") einmündet, und daß die Rückschlagventilaufnahmebohrung (59,59',59") achsparallel zu der Pumpenaufnahmebohrung (53) angeordnet ist.

8. Hydraulikaggregat nach einem oder mehreren der vorhergehenden Ansprüche 1 - 7, **dadurch gekennzeichnet, daß** zwischen der zweiten und der dritten Aufnahmebohrung (56',56") für die zweite und dritte Fördervorrichtung (33,34) eine Durchgangsbohrung (60) vorgesehen ist, welche zur Durchführung einer elektrischen Leitung dient.

9. Hydraulikaggregat nach Anspruch 1, **dadurch gekennzeichnet, daß** an die Druckseite der Fördervorrichtungen (32,33,34) ein Sammelkanal (76) angeschlossen ist, welcher mit dem Hochdruckspeicher (14) verbunden ist.

## Claims

1. A hydraulic unit for slip-controlled brake systems,
including an accommodating member (48) which accommodates inlet and outlet valves (26-29; 41-44) in several valve accommodating bores (51-51"', 52-52"') of a first and a second valve row (X, Y),
including further valve accommodating bores (54,54',55, 55') arranged in a third valve row (Z) spaced from the first and the second valve row (X,Y),
including a pump accommodating bore (53) arranged between the second and the third valve row (X,Y) for the accommodation of at least one pump driving element, and accommodating bores (56,56',56"') for the accommodation of feeding devices (32,33,34) of a pump (30), and
including several pressure fluid channels that connect the valves (26-29;41-44;8-11) to wheel brakes (4-7) and are able to establish a hydraulic connection between a braking pressure generator (1) and the wheel brakes (4-7),
**characterized in that**
a first accommodating bore (56) for a first feeding device (32) of the pump (30) is passed through between valve accommodating bores (51',51") of the first and the second valve row (X, Y), and
**in that** second and third accommodating bores (56', 56") for the accommodation of second and third feeding devices (33, 34) of the pump (30) are passed through between valve accommodating bores (54,55; 54',55') of the third valve row (Z).

2. The hydraulic unit as claimed in claim 1,
**characterized in that** the accommodating bores (56, 56',56'') for feeding devices (32,33,34) are arranged like a v at an angle (α) relative to each other.

3. The hydraulic unit as claimed in claim 2,
**characterized in that** the angle (α) between respectively adjacent accommodating bores (56,56',56") is identical and amounts to 120°.

4. The hydraulic unit as claimed in claim 1,
**characterized in that** a row of pressure sensor accommodating bores (57,57',57",57"') are provided, arranged beside the third valve row (Z), and **in that** in each case the second and third accommodating bores (56', 56") for feeding devices (33, 34) of the pump (30) extend between valve accommodating bores (54, 54') of the third valve row (Z) and between pressure sensor accommodating bores (57, 57"').

5. The hydraulic unit as claimed in claim 2,
**characterized in that** an accumulator accommodating bore (58) is provided in parallel to the axis of the first accommodating bore (56) for the first feeding device (32), and **in that** the accumulator accommodating bore (58) and the first accommodating bore (56) are arranged at a frontal end of the accommodating member (48).

6. The hydraulic unit as claimed in claim 5,
**characterized in that** the accumulator accommodating bore (58) is passed through between adjacent valve accommodating bores (51",51"';52",52"') and at right angles relative to the valve rows (X,Y).

7. The hydraulic unit as claimed in claim 1,
**characterized in that** a non-return valve accommodating bore (59, 59', 59") opens into each accommodating bore (56, 56', 56") for a feeding device (32, 33, 34), and **in that** the non-return valve accommodating bore (59, 59', 59") is arranged in parallel to the axis of the pump accommodating bore (53).

8. The hydraulic unit as claimed in any one or more of the preceding claims 1 to 7,
**characterized in that** between the second and the third accommodating bore (56', 56") for the second and third feeding device (33, 34) a through-bore (60) is provided, which serves as a passage for an electric line.

9. The hydraulic unit as claimed in claim 1,
**characterized in that** connected to the pressure side of the feeding devices (32, 33, 34) is a collecting main (76) that is connected to the highpressure accumulator (14).

## Revendications

1. Groupe hydraulique pour systèmes de freinage à régulation du patinage,
comportant un corps de réception (48) qui reçoit dans plusieurs trous de réception de soupape (51-51"', 52-52"') d'une première et d'une deuxième rangée de soupapes (X, Y), des soupapes d'admission et d'échappement (26-29 ; 41-44),
comportant d'autres trous de réception de soupape (54, 54', 55, 55') disposés à distance de la première et de la deuxième rangée de soupapes (X, Y), dans une troisième rangée de soupapes (Z),
comportant un trou dé réception de pompe (53) disposé entre la deuxième et la troisième rangée de soupapes (X, Y) pour recevoir au moins un élément d'entraînement de pompe, et
comportant des trous de réception (56, 56', 56") pour recevoir des dispositifs de refoulement (32, 33, 34) d'une pompe (30), et
comportant plusieurs canaux de fluide sous pression reliant les soupapes (26-29 ; 41-44 ; 8-11) ainsi que des freins de roue (4-7), lesquels permettent une liaison hydraulique entre un transmetteur de pression de freinage (1) et les freins de roue (4-7),
**caractérisé en ce que**
un premier trou de réception (56) pour un premier dispositif de refoulement (32) de la pompe (30) passe entre des trous de réception de soupape (51, 51") de la première et de la deuxième rangée de soupapes (X, Y), et
des deuxièmes et troisièmes trous de réception (56', 56") pour la réception de deuxièmes et de troisièmes dispositifs de refoulement (33, 34) de la pompe (30) passent entre des trous de réception de soupape (54, 55 ; 54', 55') de la troisième rangée de soupapes (Z).

2. Groupe hydraulique selon la revendication 1, **caractérisé en ce que** les trous de réception (56, 56', 56") pour des dispositifs de refoulement (32, 33, 34) sont disposés en V suivant un angle (α) les uns par rapport aux autres.

3. Groupe hydraulique selon la revendication 2, **caractérisé en ce que** l'angle (α) entre des trous de réception (56, 56', 56") voisins est identique et est égal à 120°.

4. Groupe hydraulique selon la revendication 1, **caractérisé en ce qu'**il est prévu une rangée de trous de réception de capteur de pression (57, 57', 57", 57"') qui sont disposés à côté de la troisième rangée de soupapes (Z), et **en ce que** le deuxième et le troisième trous de réception (56', 56") pour des dispositifs de refoulement (33, 34) de la pompe (30) passent entre des trous de réception de soupape (54, 54') de la troisième rangée de soupapes (Z) et entre des trous de réception de capteurs de pression (57, 57"').

5. Groupe hydraulique selon la revendication 2, **caractérisé en ce qu'**il est prévu un trou de réception d'accumulateur (58) parallèle à l'axe du premier trou de réception (56) pour le premier dispositif de refoulement (32), et **en ce que** le trou de réception d'accumulateur (58) et le premier trou de réception (56) sont disposés sur une surface frontale du corps de réception (48).

6. Groupe hydraulique selon la revendication 5, **caractérisé en ce que** le trou de réception d'accumulateur (58) passe entre des trous de réception de soupape (51", 51''' ; 52", 52"') voisins ainsi que perpendiculairement aux rangées de soupapes (X, Y).

7. Groupe hydraulique selon la revendication 1, **caractérisé en ce que** dans chaque trou de réception (56, 56', 56") pour un dispositif de refoulement (32, 33, 34) débouche un trou de réception de clapet de non-retour (59, 59', 59"), et **en ce que** le trou de réception de clapet de non-retour (59, 59', 59") est disposé parallèlement à l'axe du trou de réception de pompe (53).

8. Groupe hydraulique selon une ou plusieurs des revendications 1 à 7 précédentes, **caractérisé en ce qu'**il est prévu, entre le deuxième et le troisième trous de réception (56', 56") pour le deuxième et le troisième dispositifs de refoulement (33, 34), un trou débouchant (60) qui sert à la traversée d'une ligne électrique.

9. Groupe hydraulique selon la revendication 1, **caractérisé en ce qu'**au côté refoulement des dispositifs de refoulement (32, 33, 34) est raccordé un canal de collecte (76) qui est relié à l'accumulateur haute pression (14).
